# EUROPEAN PATENT APPLICATION

(11) **EP 2 416 192 A1**
(43) Date of publication of application: **08.02.2012**
(21) Application number: 10841800.5
(22) Date of filing: 04.06.2010
(51) Int. Cl.: G02B 6/26, G02B 6/36, G02B 26/08

(54) **MULTI-CORE OPTICAL FIBER FERRULE BODY FOR AIR-TIGHT PACKAGING OF OPTICAL SWITCH**

(30) Priority: 20.05.2010 CN 201010183333
(71) Applicant: Chaozhou Three-Circle (Group) Co., Ltd., Chaozhou, Guangdong 515646 (CN); Nanchong Three-Circle Electronics Co., Ltd., Nanchongn Sichuan 637100 (CN)
(72) Inventor: XIE, Cansheng, Chaozhou, Guangdong 515600 (CN); WEN, Yansheng, Chaozhou, Guangdong 515600 (CN)
(74) Representative: Vandeberg, Marie-Paule L.G.
(86) International application number: PCT/CN2010/073546
(87) International publication number: WO 2011/143833

(57) **Abstract**

The invention relates to a multi-core optical fiber ferrule body (4) for hermetic packaging of an optical switch, which comprises a plurality of optical fiber ferrules (1); the optical fiber ferrules (1) are tubular, the plurality of the optical fiber ferrules (1) are radially closely arranged, and axial lines of the optical fiber ferrules (1) are parallel mutually; and the adjacent optical fiber ferrules (1) are packaged by using glass (2) for realizing fixed connection and sealing. The multi-core optical fiber ferrule body (4) can effectively improve the sealing effect and reduce the packaging cost; the invention provides a brand new large chamber sealing solution for packaging the MEMS (micro-electromechanical system) optical switch, which can realize adjustable coupling of an internal circuit, and external optical input and output ports can realize full sealing of the optical switch in the final packaging, thereby improving the long-term operational reliability of the optical switch.

## Description

### Technical Field

The invention belongs to the field of optical communication devices and specifically relates to a multi-core optical fiber ferrule body for hermetic packaging of an optical switch, which is applicable to large chamber packaging schemes.

### Background of the Invention

Optical fiber communication has entered the era of an optical fiber network at the end of the last century after realizing high-speed and high-capacity point-to-point transmission. Dense wavelength division multiplexing (DWDM) can fully utilize huge bandwidth of optical fibers, and we can expect that it will not be long to achieve the obj ect of establishing optical Internet. As the number of multiplexing wavelength channels is increased sharply, the transmission capacity of the optical fibers is increased in the exponential form. Correspondingly, the routing and the switching of an optical transfer network become a bottleneck of the whole network. The transmission capacity is relatively easy to expand through the DWDM technology, but the switching/the routing still adopts optical-electrical-optical (OEO) way mostly, so that the contradiction between the two becomes more and more prominent. The way for solving the problem is to establish an optical layer with powerful functions, and the optical layer has the all-optical switching function, such as optical cross connection (OXC), optical add/drop multiplexing (OADM) and the like, and the flexible expandability, and can conduct transparent transmission. Therefore, all-optical switching equipment is core equipment of the optical transfer network.

One important application of the MEMS technical in an optical fiber communication network is to utilize micromotion micro-mirrors to manufacture an optical switch matrix so as to realize the functions of conduction and disconnection of an optical path, the structure is compact, the weight is light, and the expansion is easy. Compared with mechanical optical switches and waveguide type optical switches (such as PLCS (planar lightwave circuit splitters)), the MEMS optical switches have better performances, such as low insertion loss, small crosstalk, high extinction ratio, good repeatability, moderate response speed, long service life and high reliability, no relation to wavelength, polarization, rate and modulation way, and can be expanded into a large-scale optical cross connection switch matrix.

The MEMS optical switches have two structures of 2D (two-dimensional) digital and 3D (three-dimensional) analog. The 2D structure has the benefit of simple control and the shortcoming that the number of switching ports can not be made very large due to the limitations of optical distance and area of the micro-mirrors.

The invention is used in the analog 3D structure, the 3D structure has the advantage of a very large number of the switching ports, and can further realize the switching capacity of thousands of the ports.

The 3D MEMS optical switches have many advantages and are core devices for realizing an all optical network, dozens of companies around the world engage in research and development of the MEMS optical switches, and the prospects are very good. However, the 3D MEMS optical switches have very high requirement on working environment because 3D NxN optical switches have very high requirement on precision and comprise MEMS devices and various lens arrays therein, in particular to MEMS manufactured by using the semiconductor process, and the structure is compounded with an electronic control and mechanical motion system; and fine dust may block the rotation of the micro-mirrors and thus cause the failure, the mechanical motion of the MEMS micro-mirrors depends on the electrostatic role, humid gas can lead static electricity to fail, external corrosive gas can also corrode the surfaces of the micro-mirrors and reduce the reflectivity, the series of problems can lead the packaging of the optical switches to become very important, and the traditional packaging adopts adhesive for bonding and will be aged along with the time lapse and the changes in the complex working environment, thereby enabling internal parts (such as MEMS) in the optical switches to be directly exposed in the external environment and fail gradually.

### Summary of the Invention

Against the shortcomings of the prior art, the invention aims at providing a multi-core optical fiber ferrule body for hermetic packaging of an optical switch, which can effectively improve the sealing effect, reduce the packaging cost and improve the sealing reliability.

In order to realize the purposes, the technical scheme of the invention is as follows:

The multi-core optical fiber ferrule body for hermetic packaging of the optical switch comprises a plurality of optical fiber ferrules; the optical fiber ferrules are tubular, the plurality of the optical fiber ferrules are radially closely arranged, and axial lines of the optical fiber ferrules are parallel mutually; and the adjacent optical fiber ferrules are packaged by using glass for realizing fixed connection and sealing. The optical fiber ferrules adopt metal, ceramic or other materials which are applicable to glass packaging with the melting point above 300 DEG C, as the melting point of the optical fiber ferrules is high, the melting point of the glass for sealing is lower, the structures of the optical fiber ferrules can not be damaged when using the glass for connection and sealing, and good fixing and sealing can be realized. The traditional packaging adopts adhesive for bonding and will be aged along with the time lapse and the changes in the complex working environment, thereby causing air leakage or movement, enabling other internal parts in the optical switch to be directly exposed in the air or enabling the position of optical fibers to move relatively and causing faults in sealing or an optical path. However, the invention adopts the glass for sealing and sealing, compared with the adhesive, the reliability is greatly improved, and the reliability and the service life of the optical switch are greatly improved. The preferential material for the optical fiber ferrules is ceramic, ceramic ferrules have been widely applied in an optical fiber communication system, and the ceramic ferrules have corrosion resistance, oxidation resistance, good compactness and low cost, and the performances are reliable particularly.

Further, a framework is arranged on the radial periphery of the optical fiber ferrule body, and the framework and the adjacent optical fiber ferrules are packaged by using the glass for realizing fixing and sealing. When the optical fiber ferrule body is assembled on the optical switch, the framework facilitating the connection with a sealing housing can be arranged on the radial periphery of the optical fiber ferrule body so as to facilitate the connection with the sealed housing of the optical switch. The preferential framework is a metal framework; in order to facilitate the connection with the sealed housing of the optical switch, an electroplated nickel layer is further formed on the surface of the metal framework. The preferential thickness of the electroplated nickel layer is 2-4µm.

Further, the outer diameter of each optical fiber ferrule can be any size, in particular to less than or equal to 0.6mm. At present, the inner diameter of the universal optical fiber ferrules is 0.125mm and 0.08mm; and the outer diameter is 2.5mm. In order to further improve the miniaturization and the integration of the optical switch, the optical fiber ferrules with the smaller outer diameter can be used, such as 0.6mm, 0.5mm and the like, thereby greatly improving the integration level of an optical fiber array of the optical switch and also greatly improving the integration level of the whole optical switch.

The radial cross section of the plurality of the optical fiber ferrules after radial arrangement can be a square array, a rectangular array, a circular array, an oval array, a regular triangular array, a regular hexagonal array or the array in any shape. The square array is the n×n array, n is an integer which is greater than or equal to 2, such as the 4×4 array, the 12×12 array, the 32×32 array and the like. The rectangular array is the m×n array, m≠n, m is the integer which is greater than or equal to 1, n is the integer which is greater than or equal to 2, such as the 3×4 array, the 10×20 array and the like. The square array and the rectangular array are the row-column type arrays, that is rows and columns are orthogonal. In general, the circular array also refers to the row-column type array, and the whole shape approaches to a circle. In general, the oval array also refers to the row-column type array, and the whole shape approaches to an oval. The regular triangular array is different with the row-column type arrays, such as the regular triangular array with each edge comprising three optical fiber ferrules, then the regular triangular array comprises six optical fiber ferrules in total, the six optical fiber ferrules can be seen as a three-layer structure, the first layer comprises three optical fiber ferrules in close arrangement, the second layer comprises two optical fiber ferrules stacked on two concave positions which are naturally formed by the first layer, the third layer comprises one optical fiber ferrule stacked on the concave position which is naturally formed by the second layer, when in manufacturing, very high precision can be obtained by using the natural stacking way, the integration level of such stacking way is highest, and the maximum optical fiber ferrules can be integrated on the same area. The regular hexagonal array is similar to the regular triangular array, and the adjacent upper and the lower layers are just in dislocation, thereby obtaining the highest integration level. Of course, the array can be made into any shape according to needs. The stacking way of the circular array and the oval array can also adopt the stacking way of the regular triangular array, and the whole shape approaches the circle or the oval.

Further, in order to facilitate the assembly of the optical fibers, an optical fiber leading-in hole is arranged at one end of each optical fiber ferrule; each optical fiber leading-in hole is connected with an axial inner hole of the optical fiber ferrule; and the hole diameter of each optical fiber leading-in hole is gradually reduced from outside to inside till being equal to the hole diameter of the axial inner hole of the optical fiber ferrule.

Further, in order to facilitate the glass packaging and lead the molten liquid glass to better carry out fixed connection and sealing with the optical fiber ferrules, an annular groove or a thread groove is formed on the outer surface of one section of each optical fiber ferrule, and the glass is molten on each annular groove or the thread groove for realizing fixed connection and sealing. As a preferential realization way, an annular step is arranged on the outer surface at one end of each optical fiber ferrule, and the outer diameter of each annular step is less than the outer diameter of the optical fiber ferrule; and the glass is molten on each annular step for realizing fixed connection and sealing. As another preferential realization way, the outer surface at one end of each optical fiber ferrule is shaped like a conical surface, and the outer diameter of each conical surface is less than the outer diameter of the optical fiber ferrule; and the glass is molten on each conical surface for realizing fixed connection and sealing.

Compared with the prior art, the invention has the following advantages and benefits:
1) The traditional organic adhesive can not achieve the permanent sealing as sealing material, which is mainly decided by the performances of the organic material, the organic adhesive, the metal and the optical fiber ferrules only form temporary sealing by physical bonding, and the organic adhesive can be gradually aged along with the time lapse under the action of temperature, water vapor, light irradiation and other external environments, thereby hardening an interface and further causing sealing failure or leading the positions of the optical fibers to move relatively. The invention adopts the glass material with the lower melting point for completing the optical fiber ferrule array and the fixed connection and the sealing with the metal framework, as the glass can cause the interface reaction with the optical fiber ferrules and the metal framework under a certain temperature, a firm physical and chemical binding layer can be formed; furthermore, the glass is inert, the permanent fixing and the sealing can be further achieved.
2) The optical fiber ferrule body of the invention can realize the combination of thousands of the ports, the volume is very small, the precision is high, for example, the optical fiber ferrules with the outer diameter of 0.5mm can be adopted for manufacturing the 32×32 optical fiber ferrule array, the area is 1.6×1.6cm², plus a metal outer frame, the size can also be controlled within 4 cm², and 1024 optical fibers can be assembled in such a small area with high precision. The precision of the center distance of each optical fiber ferrule after sealing can be within ±0.005mm.
3) The outer frame adopts the metal material, thereby facilitating the realization of firm and hermetic bonding with the metal sealed housing of the optical switch through the welding way, further forming the optical switch with a sealed cavity and fundamentally ensuring the demand on long-term reliable work of the optical switch.
4) The glass is utilized for sealing the optical fiber ferrule array, thereby replacing the traditional adhesive bonding way, enabling the positioning of the optical fibers to be more precise and firm, avoiding the faults in the optical path caused by relative movement of the positions of the optical fibers due to aging of the adhesive in high-temperature and high-humidity tests, and further ensuring the reliability of the work of the optical switch under the harsh environments.
5) The invention is adopted as array type optical input and output ports for reliable packaging of the optical switch, thereby easily realizing a large chamber sealing scheme, further realizing free adjustment of various functional modules and parts, which are built in the optical switch, further obtaining the optimal optical effect and realizing low loss, low crosstalk and high reliability of the optical switch. By adopting the large chamber sealing scheme, the MEMS, a lens and other parts in an internal circuit do not need to be sealed (the sealing difficulty of the MEMS is great, and the sealing cost of the MEMS occupies above 40% of the whole device) and can be freely adjusted, an optical fiber array body can be fixed after the optical path is well coupled, and a cover is finally sealed for completing the large chamber sealing. The scrappage situation of the parts can be avoided, and the internal circuit can be adjusted freely and is easy for alignment, thereby controlling the packaging cost of the whole. But the total packaging cost in the prior art is high, which is mainly because the MEMS and the lens are difficult to be sealed when adopting small chamber sealing, and the optical path is very difficult for alignment; furthermore, once the deviation of the position is detected after sealing, the expensive MEMS part will be scrapped.

### Brief Description of the Drawings

Figure 1 is a schematic diagram of cross-section structure of multi-core optical fiber ferrule body for hermetic packaging of optical switch;
Figure 2 is a schematic diagram of cross-section structure of multi-core optical fiber ferrule body for hermetic packaging of optical switch, including outer frame;
Figure 3 is a schematic diagram of optical fiber ferrule structure;
Figure 4 is a schematic diagram of optical fiber ferrule structure;
Figure 5 is a schematic diagram of optical fiber ferrule structure;
Figure 6 is a schematic diagram of optical fiber ferrule structure;
Figure 7 is a schematic diagram of optical fiber ferrule structure;
Figure 8 is a schematic diagram of optical fiber ferrule structure;
Figure 9 is a schematic diagram of optical fiber ferrule structure;
Figure 10 is a schematic diagram of optical fiber ferrule structure;
Figure 11 is a schematic diagram of square array;
Figure 12 is a schematic diagram of regular hexagonal array.

### Detailed Description of the Invention

In combination with figures, the invention is further described in detail.

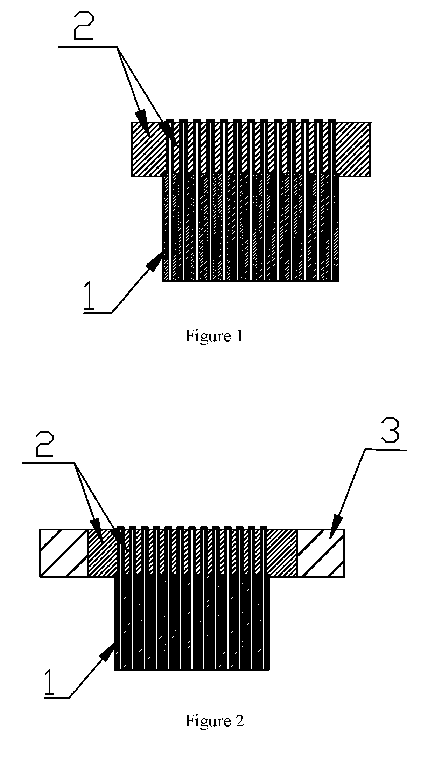

As shown in Figure 1, a multi-core optical fiber ferrule body for hermetic packaging of an optical switch comprises 13×13 optical fiber ferrules 1; the optical fiber ferrules are tubular, the plurality of the optical fiber ferrules are radially closely arranged for forming a square array, and axial lines of the optical fiber ferrules are parallel mutually; and the adjacent optical fiber ferrules are packaged by using glass 2 for realizing fixed connection and sealing. A metal framework 3 is further arranged on the radial periphery of the optical fiber ferrule body, and the metal framework 3 is packaged with the adjacent optical fiber ferrules 1 by using the glass 2 for realizing fixing and sealing, as shown in Figure 2. The outer shape of the metal framework 3 can be rectangular, circular, oval or rhombic and almost all the geometrical shapes. The material of the metal framework can adopt stainless steel, such as SS446 alloy.

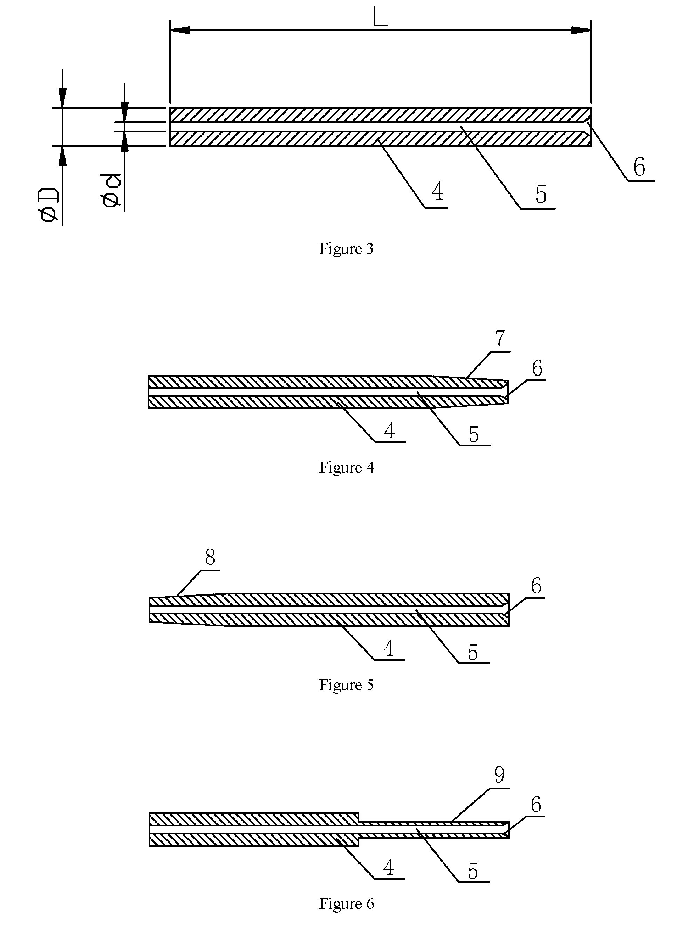

As shown in Figure 3, each optical fiber ferrule 1 comprises a ferrule body 4 and an axial inner hole 5, and an optical fiber leading-in hole 6 is arranged at one end of each optical fiber ferrule 1; each optical fiber leading-in hole 6 is connected with the axial inner hole 5 of the optical fiber ferrule; the hole diameter of each optical fiber leading-in hole 6 is gradually reduced from outside to inside till being equal to the hole diameter of the axial inner hole 5 of the optical fiber ferrule. The preferential length L of each optical fiber ferrule 1 is 5-10mm, and the outer diameter ΦD of each optical fiber ferrule 1 is 0.6mm or below, such as 0.5mm. In general, the diameter Φd of each axial inner hole of the optical fiber ferrule is 0.125mm or 0.08mm, and the size needs to be matched with the diameter of each optical fiber. The length, the outer diameter, the inner diameter and the like of each optical fiber ferrule 1 can be adjusted according to different requirements.

As shown in Figure 4, the outer surface at one end of each optical fiber ferrule 1, where the optical fiber leading-in hole 6 is located, is shaped like a conical surface 7, and the outer diameter of each conical surface 7 is less than the outer diameter of the optical fiber ferrule 1; and the glass can be conveniently molten on each conical surface 7 for realizing fixed connection and sealing.

As shown in Figure 5, the optical fiber leading-in hole 6 is arranged at one end of each optical fiber ferrule 1, the outer surface at the other end is shaped like the conical surface 8, and the outer diameter of each conical surface 8 is less than the outer diameter of the optical fiber ferrule 1; and the glass can be conveniently molten on each conical surface for realizing fixed connection and sealing.

As shown in Figure 6, an annular step 9 is arranged on the outer surface at one end of each optical fiber ferrule 1, where the optical fiber leading-in hole 6 is located, and the outer diameter of each annular step 9 is less than the outer diameter of the optical fiber ferrule; and the glass can be conveniently molten on each annular step 9 for realizing fixed connection and sealing.

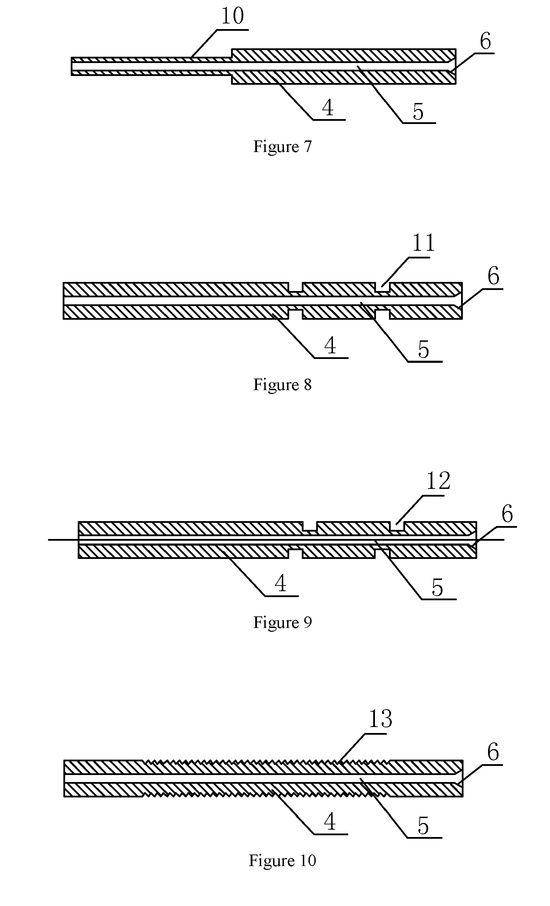

As shown in Figure 7, the optical fiber leading-in hole 6 is arranged at one end of each optical fiber ferrule 1, the annular step 10 is arranged on the outer surface at the other end, and the outer diameter of each annular step 10 is less than the outer diameter of the optical fiber ferrule 1; and the glass can be conveniently molten on each annular step 10 for realizing fixed connection and sealing.

As shown in Figure 8, an annular groove 11 is formed on the outer surface of each optical fiber ferrule 1, and the glass can be conveniently molten on each annular groove 11 for realizing fixed connection and sealing.

As shown in Figure 9, a thread groove 12 is formed on the outer surface of one section of each optical fiber ferrule 1, and the glass can be conveniently molten on each thread groove 12 for realizing fixed connection and sealing.

As shown in Figure 10, a jagged groove 13 is formed on the outer surface of one section of each optical fiber ferrule 1, and the glass can be conveniently molten on each jagged groove 13 for realizing fixed connection and sealing.

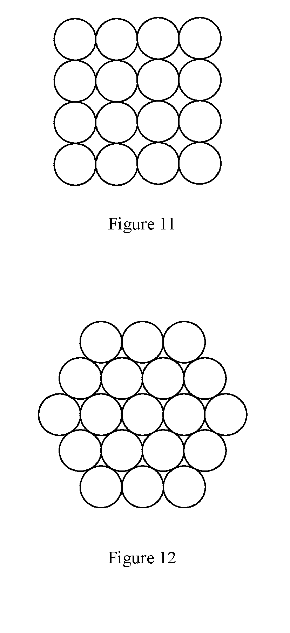

Figure 11 is a schematic diagram of a 4×4 square array, the arrangement is close, and rows and columns are aligned.

Figure 12 is a regular hexagonal array with the side length of 3, and the array comprises 19 optical fiber ferrules in total. The adjacent upper and the lower layers are just in dislocation, thereby obtaining the highest integration level.

Each optical fiber ferrule in the 13×13 multi-core optical fiber ferrule body for hermetic packaging of the optical switch fixedly seals one optical fiber, thereby obtaining a 13×13 optical fiber array finished product; and the material of each optical fiber ferrule is ceramic, the outer diameter of each optical fiber ferrule is 0.5mm, the hole diameter of each axial inner hole is 0.125mm, and the length is 5mm.

The tests and the performances, applying the 13×13 optical fiber array finished product manufactured by the invention are as shown in the following table:

| Performance Indicators | Unit (Test Conditions) | Measurement (Test) Result |
|---|---|---|
| Air Tightness | Helium leakage rate CC/sec @1ATM | 10^-8 |
| Cold and Heat Impact Test | (RT-125°C/10sec) | No leakage |
| Cold and Heat Cycle Test | -40°C∼+85°C 100cycle | No leakage |
| High-temperature and High-humidity Test | +85°C, 85% humidity 1000h | No leakage and no aging |
| Array Pitch and Accumulation | Less than 2um | Qualified |
| Parallelism of Ferrules | 0.02 degree | Qualified |

## Claims

1. A multi-core optical fiber ferrule body (4) for hermetic packaging of an optical switch, **characterized by** comprising a plurality of optical fiber ferrules (1); the optical fiber ferrules (1) are tubular, the plurality of the optical fiber ferrules (1) are radially closely arranged, and axial lines of the optical fiber ferrules are parallel mutually; and the adj acent optical fiber ferrules (1) are packaged by using glass (2) for realizing fixed connection and sealing.

2. The multi-core optical fiber ferrule body (4) for hermetic packaging of an optical switch according to claim 1, **characterized in that** the optical fiber ferrules (1) adopt metal, ceramic or other materials which are applicable to glass packaging with the melting point above 300 DEG C.

3. The multi-core optical fiber ferrule body (4) for hermetic packaging of an optical switch according to claim 2, **characterized in that** a framework (3) is arranged on the radial periphery of the optical fiber ferrule body (4), and the framework (3) is packaged with the adj acent optical fiber ferrules (1) by using the glass (2) for realizing fixing and sealing.

4. The multi-core optical fiber ferrule body for hermetic packaging of an optical switch according to claim 3, **characterized in that** the framework (3) is a metal framework.

5. The multi-core optical fiber ferrule body (4) for hermetic packaging of an optical switch according to claim 4, **characterized in that** an electroplated nickel layer is further formed on the surface of the metal framework (3).

6. The multi-core optical fiber ferrule body (4) for hermetic packaging of an optical switch according to claim 5, **characterized in that** the thickness of the electroplated nickel layer is 2-4um.

7. The multi-core optical fiber ferrule body for hermetic packaging of an optical switch according to any one of claim 1-6, **characterized in that** the outer diameter of each optical fiber ferrule is less than or equal to 0.6mm.

8. The multi-core optical fiber ferrule body (4) for hermetic packaging of an optical switch according to claim 7, **characterized in that** the radial cross section of the plurality of the optical fiber ferrules (1) after radial arrangement forms a square array, a rectangular array, a circular array, an oval array, a regular triangular array or a regular hexagonal array.

9. The multi-core optical fiber ferrule body (4) for hermetic packaging of an optical switch according to claim 8, **characterized in that** an optical fiber leading-in hole (6) is arranged at one end of each optical fiber ferrule (1); each optical fiber leading-in hole (6) is connected with an axial inner hole (5) of the optical fiber ferrule (1); and the hole diameter of each optical fiber leading-in hole (6) is gradually reduced from outside to inside till being equal to the hole diameter of the axial inner hole of the optical fiber ferrule (1).

10. The multi-core optical fiber ferrule body (4) for hermetic packaging of an optical switch according to claim 9, **characterized in that** an annular groove (11) or a thread groove (12) is formed on the outer surface of one section of each optical fiber ferrule (1), glass (2) being molten on each annular groove (11) or the thread groove (12) for realizing fixed connection and sealing;

11. The multi-core optical fiber ferrule body (4) for hermetic packaging of an optical switch according to claim 9, **characterized in that** an annular step (9, 10) is arranged on the outer surface at one end of each optical fiber ferrule (1), the outer diameter of each annular step (9, 10) being less than the outer diameter of the optical fiber ferrule, glass being molten on each annular step (9, 10) for realizing fixed connection and sealing.

12. The multi-core optical fiber ferrule body (4) for hermetic packaging of an optical switch according to claim 9, **characterized in that** the outer surface at one end of each optical fiber ferrule (1) is shaped like a conical surface (7, 8), the outer diameter of each conical surface (7, 8) being less than the outer diameter of the optical fiber ferrule (1), glass being molten on each conical surface (7, 8) for realizing fixed connection and sealing.
